# EUROPEAN PATENT SPECIFICATION

(11) **EP 3 255 009 B1**
(45) Date of publication and mention of the grant of the patent: **11.03.2020**
(21) Application number: 16746389.2
(22) Date of filing: 15.01.2016
(51) Int. Cl.: B66B 11/08, F16D 65/22, F16D 121/22, B66B 11/04, B66D 5/08, B66D 5/30

(54) **ELECTROMAGNETIC BRAKE DEVICE FOR ELEVATOR**
ELEKTROMAGNETISCHE BREMSVORRICHTUNG FÜR EINEN AUFZUG
DISPOSITIF DE FREIN ÉLECTROMAGNÉTIQUE POUR ASCENSEUR

(30) Priority: 03.02.2015 JP 2015018938
(43) Date of publication of application: 13.12.2017
(73) Proprietor: Hitachi, Ltd., Tokyo 100-8280 (JP)
(72) Inventor: HAYAKAWA Tomohisa, Tokyo 100-8280 (JP); ONO Tetsuji, Tokyo 100-8280 (JP); ITO Seiya, Tokyo 100-8280 (JP)
(74) Representative: MERH-IP Matias Erny Reichl Hoffmann Patentanwälte PartG mbB
(86) International application number: PCT/JP2016/051064
(87) International publication number: WO 2016/125558

(56) References cited:
- JP-A- H09 100 082
- JP-A- 2013 018 646
- JP-A- 2014 001 064
- JP-A- 2014 223 970
- JP-A- 2014 223 970

## Description

### Technical Field

The present invention relates to an electromagnetic brake device for braking an elevator car, and more particularly, to an electromagnetic brake suitable for a machine room-less elevator.

### Background Art

Generally, a hoist for lifting and lowering an elevator car, a control unit, and a speed governor for detecting overspeed of the car are disposed in a machine room provided at the upper part of the building. The machine room-less elevator having no machine room has been increasingly applied to elevators with shorter elevating stroke at relatively low elevating speed of the car. Since the machine room-less elevator allows devices such as the hoist and the control unit conventionally disposed in the machine room to be arranged in a hoistway, passengers may suffer displeasure and uneasiness caused by an operating sound propagated through the hoistway, which may further lead to a noise problem for those who reside near the hoistway. The operating sound of the elevator includes a hoist driving sound, a braking operation sound, and the like. Especially, as a brake is operated after the car stops, and the braking operation sound is an intermittent impinging sound, it is likely to be recognized. Therefore, it is required for a braking operation to exhibit quietness.

The brake for elevator is constituted by a main body, an electromagnetic coil and a braking spring which are provided in the main body, and a movable element. The movable element is provided with a brake lining in contact with an object to be braked for stopping the hoist under the friction force. In a braking state, power supply to the electromagnetic coil is blocked to apply the brake while pressing the brake lining against the object to be braked under the restoring force of the braking spring. In a releasing state, power is supplied to the electromagnetic coil to electromagnetically attract the movable element so that the brake lining is separated from the object to be braked. At this time, the movable element impinges against the stator or the object to be braked, which generates the operating sound.

A brake structure for lessening the above-described impinging sound as disclosed in Japan Patent No. 3787862 (Patent Literature 1) has been known. The technology as disclosed in Patent Literature 1 is configured to approximate the increase/decrease rate between an urging force in the braking state and an electromagnetic attraction force by providing means for applying the urging force to the movable element in addition to the braking spring. The disclosure proposes to reduce the impinging sound at reducing operating speed by lessening the working force applied to the movable element.

### Citation List

### Patent Literature

Patent Literature 1: Japan Patent No. 3787862

### Summary of Invention

### Technical Problem

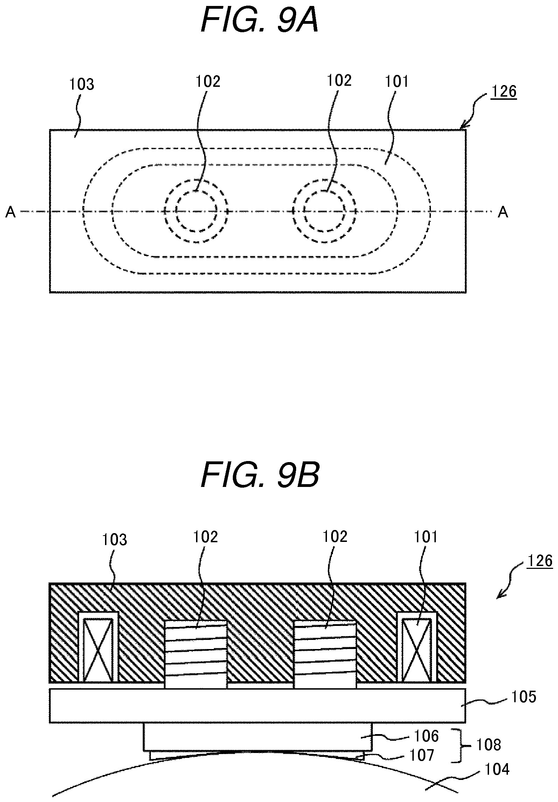

Figures 9A and 9B schematically show a generally employed electromagnetic brake for elevator. Figure 9B is a sectional view taken along line A-A of Figure 9A. A generally employed electromagnetic brake 126 is constituted by a main body 103 having a coil 101 and a braking spring 102 built therein, a movable element 105 and a brake shoe 108 (constituted by a stator 106 and a brake lining 107) respectively disposed between the main body 103 and an object to be braked 104. The main body 103 is fixed so as to be kept apart from the object to be braked 104 at a fixed interval. The braking operation will be defined as follows. Movement of the movable element 105 in transition from the braking state (that is, the brake lining 107 is in contact with the object to be braked 104) to the main body 103 will be referred to as an attracting operation. The movement of the movable element 105 in transition from the state in contact with the main body 103 to the object to be braked 104 will be referred to as a releasing operation.

In the attracting operation (from the braking state to the non-braking state), voltage application to the coil 101 magnetizes the main body 103 so that the movable element 105 is attracted to the main body 103. Meanwhile, in the releasing operation (from the non-braking state to the braking state), the voltage application is blocked so as to allow movement of the movable element 105 toward the object to be braked 104 at the timing when the reduced electromagnetic force is lower than the working force of the braking spring 102. At this time, the electromagnetic force sharply changes compared with the braking spring force, which allows a large force to act on the movable element 105, thus generating acceleration. This may cause the movable element 105 to impinge against the main body 103 or the object to be braked 104, generating impinging sound.

Patent Literature 1 discloses the technology for combining a plurality of braking springs 102 each having a different elastic modulus, or using the spring having a non-linear load displacement characteristic (for example, conical spring) to make the increase/decrease rate of the urging force approximate to that of the electromagnetic force. Then the operating sound is reduced by lessening the force acting on the movable element 105.

Patent Literature 1 discloses the structure which increases the urging force upon attraction, requiring application of the current higher than usual for maintaining the attracting state. This may result in a high increase rate of the coil temperature. The marked increase in the coil temperature may deteriorate insulating performance. In order to avoid the deterioration, resistance of a coil 101 itself has to be lowered. In order to lower the coil resistance, the coil wire length may be shortened, or the coil wire diameter may be increased. However, the respective measures as described above will cause disadvantages to be described below. Reduction in the coil wire length makes the number of turns small, thus lowering the magnetomotive force. In order to obtain the equivalent magnetomotive force, the power supply capacity has to be increased. Increase in the coil wire diameter enlarges the coil 101, and the main body 103 having such coil 101 built therein may lead to the large-sized brake.

The disclosed structure is designed to increase the urging force upon attraction so as to secure low noise property by utilizing surplus attracting force (difference between the urging force and the attracting force). The maximum value of the attracting force of the coil 101 is determined in accordance with the magnetic pole area (attraction surface area of brake), and magnetomotive force (the number of turns of coil, current value). Therefore, the coil attracting force is in proportion to the coil volume. The structure as disclosed in Patent Literature 1 is configured to increase the urging force upon attraction so that the low noise property is implemented at the sacrifice of compactness of the brake.

Devices for the machine room-less elevator such as the hoist, the car, and the control board are stored in the limited space of the hoistway. Therefore, the respective devices are required to be compact and exhibit excellent low noise property.

The present invention has been made in consideration of the above-described problem. An object of the present invention is to provide a brake structure which is compact and exhibits excellent low noise property (especially lessening the releasing operation sound) in an electromagnetic brake device for braking the hoist for elevator.

### Solution to Problem

For the purpose of achieving the above-described object, the electromagnetic brake according to the present invention comprises a movable element provided with a brake shoe for braking an object to be braked while abutting on the object to be braked mounted on a hoist for lifting and lowering a car, and a main body provided with a braking spring for applying a braking force by urging the movable element on the object to be braked and an electromagnetic coil for attracting the movable element against a spring force of the braking spring. The electromagnetic brake device includes a metal urging mechanism for urging the movable element in accordance with a displacement of the movable element from the main body to the object to be braked so as to increase a force acting in a direction opposite a displacement direction of the movable element in proportion to the displacement from the main body to the object to be braked.

### Advantageous Effects of Invention

According to the present invention, it is possible to provide a brake structure which is compact and exhibits excellent low noise property (especially lessening the releasing operation sound) in an electromagnetic brake device for braking the hoist for elevator.

### Brief Description of Drawings

Figure 1 is a perspective view of a hoistway for machine room-less elevator according to an embodiment of the present invention.
Figure 2 is a sectional view of the hoistway for machine room-less elevator according to the embodiment of the present invention.
Figure 3 is a top view of a brake for elevator according to an embodiment of the present invention.
Figure 4A is a sectional view explaining an operation of an electromagnetic brake device according to the embodiment of the present invention (in a braking state).
Figure 4B is a sectional view explaining an operation of the electromagnetic brake device according to the embodiment of the present invention (in a non-braking state).
Figure 5A is a sectional view showing the electromagnetic brake device according to the embodiment of the present invention.
Figure 5B is a sectional view showing the electromagnetic brake according to the embodiment of the present invention.
Figure 6 is a graph representing the relationship between a working force and a position of a movable element according to the embodiment of the present invention.
Figure 7A is a sectional view showing the electromagnetic brake device according to an embodiment of the present invention.
Figure 7B is a sectional view showing the electromagnetic brake device according to the embodiment of the present invention.
Figure 8 is a graph representing each displacement load characteristic of a disc spring unit and a braking spring according to the embodiment of the present invention.
Figure 9A is a top view of a conventional brake for elevator.
Figure 9B is a sectional view of the conventional brake for elevator.

### Description of Embodiments

The present invention will be described referring to embodiments.

### First Embodiment

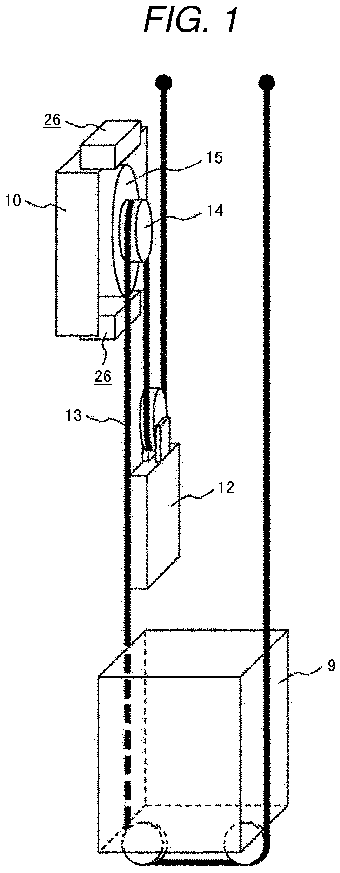

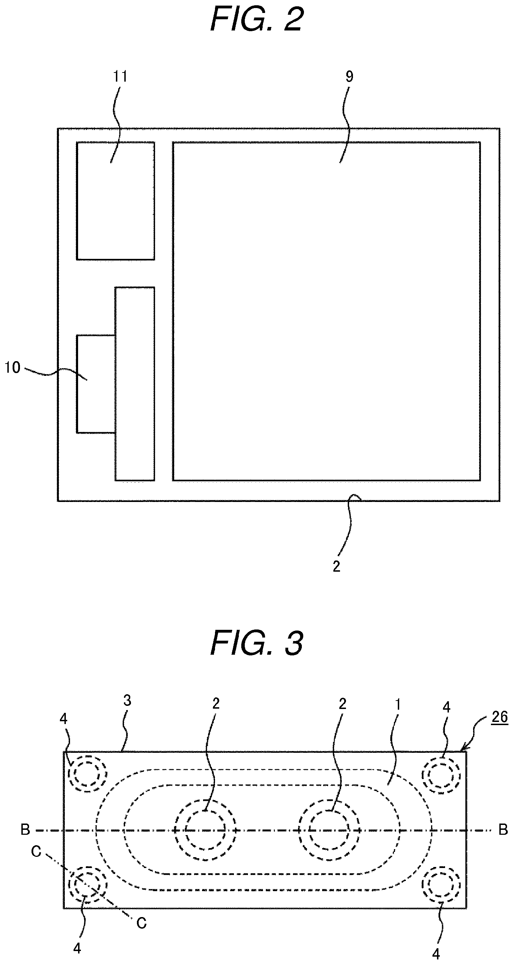

Figures 1 and 2 show an example of devices arranged in the hoistway of a machine room-less elevator. Figure 1 is a perspective view of the hoistway of the machine room-less elevator according to an embodiment of the present invention. A car 9 is lifted and lowered via a plurality of ropes 13 which are wound around a sheave 14 of a hoist 10. The sheave 14 is directly coupled to a drive unit not shown, and is driven by the drive unit. An object to be braked 15 as a brake drum is directly coupled to the sheave 14. The object to be braked 15 is braked by a brake device 26 so as to keep the car 9 stopped. A reference numeral 12 denotes a counter weight.

Figure 2 is a sectional view of the hoistway for the machine room-less elevator according to the embodiment of the present invention. Arrangement of devices for the machine room-less elevator is implemented by storing the hoist 10, the car 9, a control board 11 and the like in the limited space of the hoistway.

Figure 3 is a top view of the brake for elevator according to an embodiment of the present invention. The electromagnetic brake device 26 according to the embodiment includes a metal urging mechanism 4 disposed on peripheral edges of the main body 3 which contains a coil 1 and a braking spring 2.

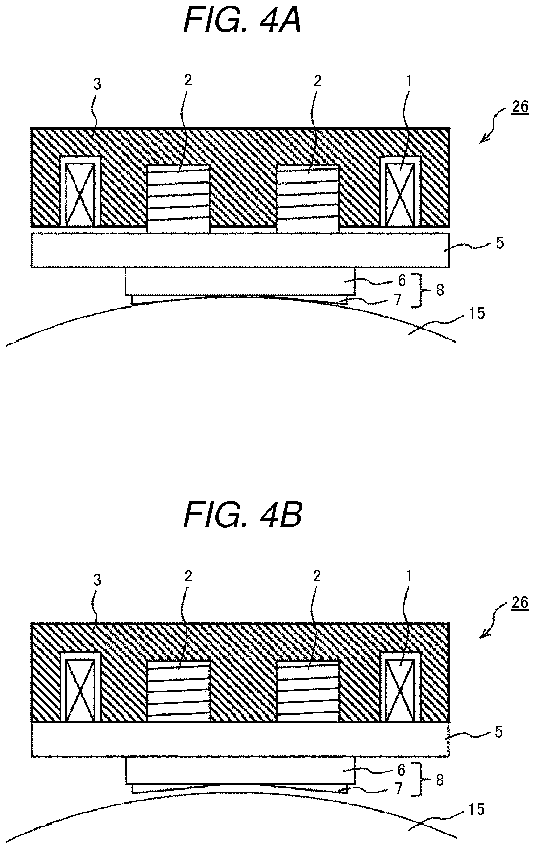

Figures 4A and 4B are sectional views taken along line B-B of Figure 3, which explain operations of the electromagnetic brake device. Figure 4A represents the state in which the electromagnetic brake device 26 applies braking force to the hoist 10. In the braking state, the pressing force of the braking spring 2 presses a brake lining 7 against the object to be braked 15 via the movable element 5 so that the sheave 14 is braked.

Figure 4B represents the non-braking state. In the non-braking state, current is applied to the coil 1 to magnetize the main body 3. Magnetization of the main body 3 attracts the movable element 5 to the main body 3 so that the brake lining 7 is separated from the object to be braked 15, thus releasing the pressing force.

As described above, the braking operation is mechanically performed by the braking spring 2, and the operation for releasing the braking force is electrically performed. If power supply is interrupted owing to power failure, the fail-safe operation is enabled to stop the car 9.

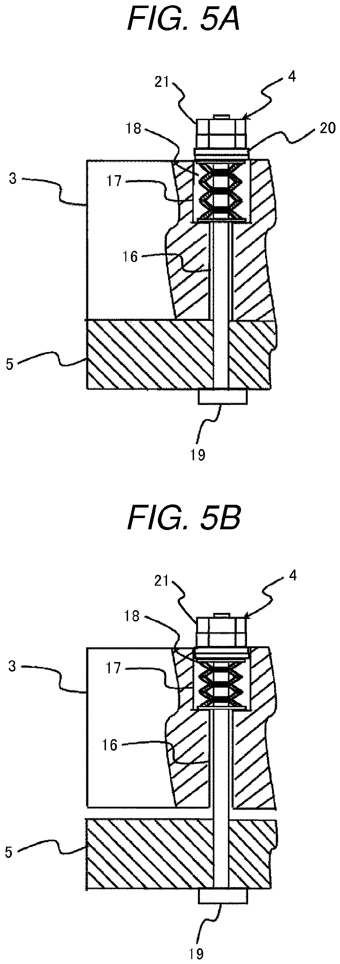

Figures 5A and 5B are sectional views taken along line C-C of Figure 3, representing the electromagnetic brake device 26 according to the first embodiment of the present invention. The basic structure of the electromagnetic brake device 26 according to the first embodiment is similar to that of a conventional non-excitation actuated type brake device except that an elastic body is provided for increasing the working force in proportion to displacement of the movable element 5 upon releasing. Preferably, the elastic body is compact and exhibits a large elastic modulus. For example, the use of the disc spring is suitable. An insertion hole 16 is formed in the movable element 5 and the main body 3 coaxially therewith. The main body 3 includes a hole 17 concentric to the insertion hole 16. A bolt having its head disposed at the side of the movable element 5 is inserted into those holes. The end of the inserted bolt 19, which protrudes from the upper surface of the main body 3, is screwed with a nut via a washer. The diameter of the hole 17 is substantially the same as the outer diameter of a disc spring unit 18. Figure 5A represents the brake in the non-braking state. In this state, the compression amount of the disc spring unit 18 is zero or extremely small.

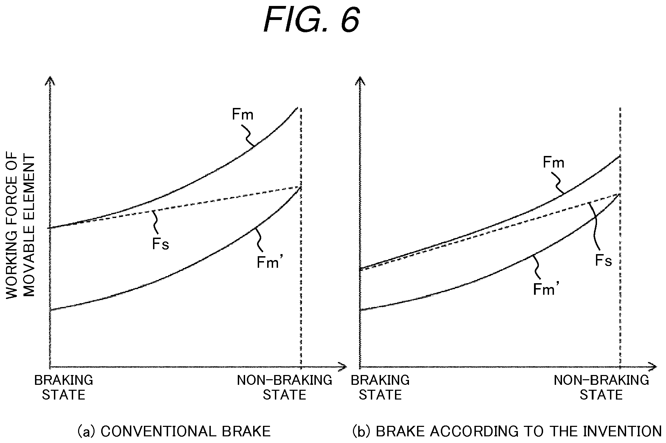

Figure 5B represents the brake in the braking state, indicating the load generated by the compressed disc spring unit 18 by the amount corresponding to displacement of the movable element 5. The load allows reduction in the operation speed of the movable element 5 so as to lessen the operating sound. Figure 6 represents the relationship between the electromagnetic force and the force acting on the movable element 5 in the aforementioned state. Each of Figures 6(a) and 6(b) shows the displacement characteristic of the force acting on the movable element 5 in the case of the conventional brake and the brake according to the embodiment, respectively. The code Fm denotes the electromagnetic force characteristic in the attracting state, and Fm' denotes the electromagnetic force characteristic in the releasing state. In the case of the conventional brake, the difference between urging force Fs of the braking spring 2 and electromagnetic force Fm becomes large when the movable element 5 and the main body 3 are brought into contact, or separated. Meanwhile, in the case of the brake according to the embodiment, when the movable element 5 and the main body 3 are brought into separated from a condition in which the movable element 5 and the main body 3 contact with each other, the load of the disc spring unit 18 acts in the direction opposite the operating direction of the movable element 5. Then the force acting on the movable element 5 becomes relatively small compared with the conventional brake. The difference between the electromagnetic force Fm and the urging force in the attracting state is made small by the aforementioned action. This makes it possible to implement the compact structure by lowering the upper limit value of the electromagnetic force, thus securing sufficient low noise property.

### Second Embodiment

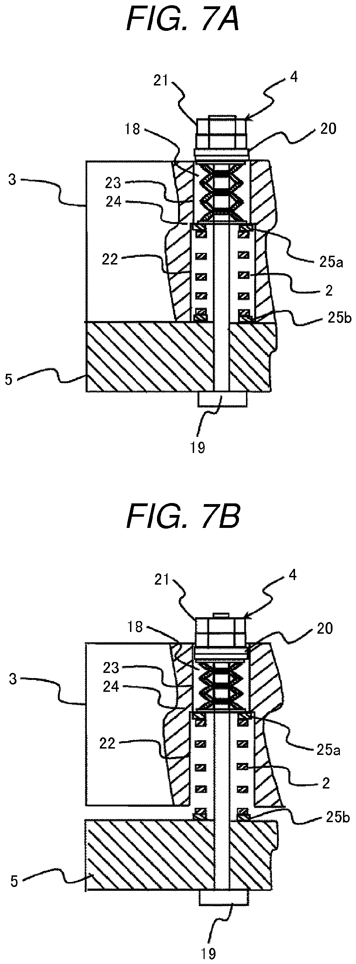

Figures 7A and 7B are sectional views each showing the electromagnetic brake device 26 according to a second embodiment of the present invention. The device according to the second embodiment is configured to dispose the disc spring unit 18 and the braking spring 2 explained in the first embodiment in series. In other words, although not shown in the drawing, the metal urging mechanism 4 is provided at a position of the braking spring 2 as shown in Fig. 3. An insertion hole 22 and a concentrically hole 23 are provided coaxially in the main body 3 so that the braking spring 2 is preliminarily compressed. The diameter of the hole 23 is smaller than that of the insertion hole 22. The resultant difference in diameter defines a shoulder part 24 at the boundary part. The bolt 19 having its head provided at the side of the movable element 5 is inserted into those holes, and the end of the inserted bolt 19 which protrudes upward from the upper surface of the main body 3 is screwed with the nuts 21 via a washer 20 for adjustment and looseness prevention. The braking spring 2 is movable in the insertion hole 22, but cannot be inserted into the hole 23. This makes it possible to preliminarily compress the braking spring 2 caught on the shoulder part 24. The disc spring 18 may reduce the braking force upon increase in displacement of the movable element 5 as a result of preventing the motion of the movable element 5. The device according to the embodiment is configured to function as a limiter which deforms the braking spring 2 disposed in series upon excessive compressional state of the disc spring unit 18 so as to prevent lowering of the braking force from the predetermined value.

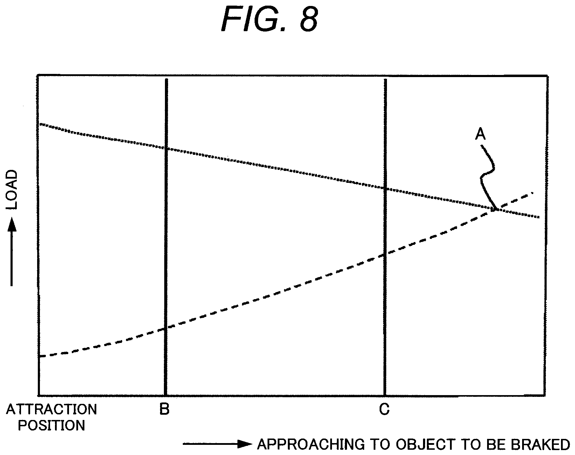

Figure 8 shows the respective load displacement characteristics of the braking spring 2 and the disc spring unit 18. Referring to the graph, y-axis denotes the load generated by the braking spring 2 and the disc spring unit 18, and x-axis denotes the gap distance between the movable element 5 and the main body 3, that is, the stroke of the movable element 5. The right end of the x-axis refers to the braking state, and the left end refers to the non-braking state (attracting state). The solid line refers to the load displacement characteristic of the braking spring 2, and the broken line refers to the load displacement characteristic of the disc spring unit. Upon attraction, the braking spring 2 is compressed so that the load functions as the force that urges the movable element 5 on the object to be braked 15. Meanwhile, since the lower part of the disc spring unit 18 is in contact with a spring seat 25a having its position regulated by the shoulder part 24, the force of the braking spring 2 dose not act on the disc spring unit 18. Accordingly, the disc spring unit 18 only generates the load in proportion to the compression amount resulting from displacement of the movable element 5. At a displacement point A as shown in Fig. 8, the counterforce of the disc spring unit and the spring force of the braking spring 2 are balanced. In the aforementioned state, the respective forces of the disc spring unit 18 and the braking spring 2 are canceled so that the apparent working force of the disc spring unit 18 becomes zero. At the position exceeding the aforementioned point of balance, the disc spring unit 18 is not compressed while allowing only the braking spring 2 to be compressed. Accordingly, a gap is formed between the spring seat 25a and the shoulder part 24. Therefore, it becomes possible to prevent the occurrence of the excessive compressional state of the disc spring unit 18 which may interfere with the braking operation. In other words, it becomes possible to suppress braking force reduction. Therefore, even if the lining 7 is worn out to increase displacement of the movable element 5, the stable low noise property may be securely kept on a long term basis without losing the braking function.

According to the first or second embodiment as described above, the operation speed of the movable element 5 may be reduced by the working force of the elastic body generating the force in the direction opposite the operating direction of the movable element 5 in the releasing state. This makes it possible to lessen the operation sound.

As described in the first or second embodiment, the metal urging mechanism 4 includes a plurality of disc springs 18. Laminating the plurality of disc springs 18 while facing the respective convex surfaces, and the respective concave surfaces with one another is likely to provide the larger elastic modulus per unit volume that is smaller than the case of the elastic body such as rubber. Additionally, the resultant elastic modulus may be kept stable for prolonged life.

As described in the first or second embodiment, the metal urging mechanism 4 may be constituted by the bolt 19 inserted through the main body 3, the movable element 5, and the disc spring 18, and the nuts 21 screwed with the bolt 19. The resultant device may be simply structured with relatively small size, which is easily combined with the electromagnetic brake device 26, resulting in improved versatility.

As described in the second embodiment, the metal urging mechanism 4 is configured to dispose the disc spring unit 18 and the braking spring 2 in series. In the non-braking state, the compression force of the braking spring 2 does not act on the disc spring unit 18, and in the braking state, the forces generated by the braking spring 2 and the disc spring unit 18 interact with each other. The aforementioned structure allows the mechanism to function as the limiter that prevents the excessive compressional state of the disc spring unit 18, which may interfere with the braking operation, thus suppressing lessening of the braking force. Even if the lining 7 is worn out to increase displacement of the movable element 5, the stable low noise property may be implemented on the long term basis without losing the braking function.

By making the elastic modulus of the braking spring 2 larger than the change rate of the urging force of the disc spring unit 18 per unit displacement, the excessive compressional state that interferes with the braking operation may be avoided, thus suppressing lowering of the braking force. Even if the lining 7 is worn out to increase displacement of the movable element 5, the stable low noise property may be implemented on the long term basis without losing the braking function.

According to the first or second embodiment, the main body 3 contains the disc spring unit 18, and the metal urging mechanism having the disc spring therein. It is possible to dispose the disc spring unit 18 and the like outside the main body 3. The device configured to have the metal urging mechanism such as the disc spring unit 18 contained inside the main body may further contribute to reduction in overall size of the electromagnetic brake device 26.

### Reference Signs List

- 1:: coil,
- 2:: braking spring,
- 3:: main body,
- 4:: metal urging mechanism,
- 5:: movable element,
- 6:: stator for brake lining,
- 7:: brake lining,
- 8:: brake shoe,
- 9:: car,
- 10:: hoist,
- 11:: control board,
- 12:: counter weight,
- 13:: rope,
- 14:: sheave,
- 15:: brake drum,
- 16:: insertion hole,
- 17:: hole,
- 18:: disc spring unit,
- 19:: bolt,
- 20:: washer,
- 21:: nut,
- 22:: insertion hole,
- 23:: hole,
- 24:: shoulder part,
- 25a, b:: spring seat,
- 26:: electromagnetic brake device

## Claims

1. An electromagnetic brake device (26) comprising a movable element (5) provided with a brake shoe (8) for braking an object (15) to be braked while abutting on the object (15) to be braked mounted on a hoist (10) for lifting and lowering a car (9), and a main body (3) provided with a braking spring (2) for applying a braking force by urging the movable element (5) on the object (15) to be braked and an electromagnetic coil (1) for attracting the movable element (5) against a spring force of the braking spring (2), **characterized in that**
the electromagnetic brake device (26) includes a metal urging mechanism (4) for urging the movable element (5) in accordance with a displacement of the movable element (5) from the main body (3) to the object (15) to be braked so as to increase a force acting in a direction opposite a displacement direction of the movable element (5) in proportion to the displacement from the main body (3) to the object (15) to be braked.

2. The electromagnetic brake device (26) according to claim 1, wherein the metal urging mechanism (4) includes a plurality of disc springs (18), which are laminated while having convex surfaces facing each other, and concave surfaces facing each other, respectively.

3. The electromagnetic brake device (26) according to claim 2, wherein the metal urging mechanism (4) includes a bolt (19) inserted through the main body (3), the movable element (5), and the disc springs (18), and a nut (21) screwed with the bolt (19).

4. The electromagnetic brake device (26) according to claim 1, wherein the metal urging mechanism (4) and the braking spring (2) are disposed in series and are configured so that a compression force of the braking spring (2) does not act on the metal urging mechanism (4) in a non-braking state, and forces generated by the braking spring (2) and the metal urging mechanism (4) act on each other in a braking state.

5. The electromagnetic brake device (26) according to claim 1, wherein an elastic modulus of the braking spring (2) is larger than a change rate of an urging force of the metal urging mechanism (4) per unit displacement.

6. The electromagnetic brake device (26) according to claim 1, wherein the metal urging mechanism (4) is contained inside the main body (3).

## Patentansprüche

1. Elektromagnetische Bremsvorrichtung (26), die ein bewegliches Element (5), das mit einem Bremsschuh (8) zum Bremsen eines zu bremsenden Objekts (15) versehen ist, der an dem zu bremsenden Objekt (15), das an einer Hebevorrichtung (10) zum Anheben und Absenken eines Fahrzeugs (9) angebracht ist, anliegt, einen Hauptkörper (3), der mit einer Bremsfeder (2) zum Ausüben einer Bremskraft durch Anpressen des beweglichen Elements (5) an das zu bremsende Objekt (15) und eine elektromagnetische Spule (1) zum Anziehen des beweglichen Elements (5) entgegen einer Federkraft der Bremsfeder (2) umfasst, **dadurch gekennzeichnet, dass**
die elektromagnetische Bremsvorrichtung (26) einen metallischen Anpressmechanismus (4) umfasst, um das bewegliche Element (5) in Übereinstimmung mit einer Verlagerung des beweglichen Elements (5) von dem Hauptkörper (3) an das zu bremsende Objekt (15) zu pressen, um eine Kraft zu erhöhen, die in einer Richtung entgegengesetzt zu einer Verlagerungsrichtung des beweglichen Elements (5) proportional zu der Verlagerung von dem Hauptkörper (3) zu dem zu bremsenden Objekt (15) wirkt.

2. Elektromagnetische Bremsvorrichtung (26) nach Anspruch 1, wobei der metallische Anpressmechanismus (4) mehrere Tellerfedern (18) aufweist, die laminiert sind, wobei sie jeweils konvexe Oberflächen, die einander zugewandt sind, und konkave Oberflächen, die einander zugewandt sind, aufweisen.

3. Elektromagnetische Bremsvorrichtung (26) nach Anspruch 2, wobei der metallische Anpressmechanismus (4) einen Bolzen (19), der durch den Hauptkörper (3), das bewegliche Element (5) und die Tellerfedern (18) eingesetzt ist, und eine Mutter (21), die mit dem Bolzen (19) verschraubt ist, umfasst.

4. Elektromagnetische Bremsvorrichtung (26) nach Anspruch 1, wobei der metallische Anpressmechanismus (4) und die Bremsfeder (2) in Reihe angeordnet sind und so konfiguriert sind, dass eine Kompressionskraft der Bremsfeder (2) in einem nicht bremsenden Zustand nicht auf den metallischen Anpressmechanismus (4) einwirkt, und dass Kräfte, die durch die Bremsfeder (2) und den metallischen Anpressmechanismus (4) erzeugt werden, in einem bremsenden Zustand aufeinander einwirken.

5. Elektromagnetische Bremsvorrichtung (26) nach Anspruch 1, wobei ein Elastizitätsmodul der Bremsfeder (2) größer als eine Änderungsrate einer Anpresskraft des metallischen Anpressmechanismus (4) pro Verlagerungseinheit ist.

6. Elektromagnetische Bremsvorrichtung (26) nach Anspruch 1, wobei der metallische Anpressmechanismus (4) in dem Hauptkörper (3) enthalten ist.

## Revendications

1. Dispositif de frein électromagnétique (26) comprenant un élément déplaçable (5) doté d'un sabot de frein (8) pour freiner un objet (15) qu'il s'agit de freiner tout en venant en butée sur l'objet (15) qu'il s'agit de freiner monté sur un élévateur (10) pour soulever et abaisser un chariot (9), et un corps principal (3) doté d'un ressort de freinage (2) pour appliquer une force de freinage afin de forcer l'élément déplaçable (5) sur l'objet (15) qu'il s'agit de freiner et une bobine électromagnétique (1) pour attirer l'élément déplaçable (5) à l'encontre d'une force de ressort du ressort de freinage (2),
**caractérisé en ce que**
le dispositif de frein électromagnétique (26) inclut un mécanisme de sollicitation en métal (4) pour forcer l'élément déplaçable (5) en accord avec un déplacement de l'élément déplaçable (5) depuis le corps principal (3) jusqu'à l'objet (15) qu'il s'agit de freiner, de manière à augmenter une force agissant dans une direction opposée à une direction de déplacement de l'élément déplaçable (5) en proportion du déplacement depuis le corps principal (3) jusqu'à l'objet (15) qu'il s'agit de freiner.

2. Dispositif de frein électromagnétique (26) selon la revendication 1, dans lequel le mécanisme de sollicitation en métal (4) inclut une pluralité de rondelles-ressort (18), qui sont empilées tout en présentant des surfaces convexes mutuellement face-à-face, et des surfaces concaves mutuellement face-à-face, respectivement.

3. Dispositif de frein électromagnétique (26) selon la revendication 2, dans lequel le mécanisme de sollicitation en métal (4) inclut un boulon (19) inséré à travers le corps principal (3), l'élément déplaçable (5), et les rondelles-ressort (18), et un écrou (21) vissé sur le boulon (19).

4. Dispositif de frein électromagnétique (26) selon la revendication 1, dans lequel le mécanisme de sollicitation en métal (4) et le ressort de freinage (2) sont disposés en série et sont configurés de telle façon qu'une force de compression du ressort de freinage (2) n'agit pas sur le mécanisme de sollicitation en métal (4) dans un état de non freinage, et les forces générées par le ressort de freinage (2) et le mécanisme de sollicitation en métal (4) agissent l'une sur l'autre dans un état de freinage.

5. Dispositif de frein électromagnétique (26) selon la revendication 1, dans lequel un module d'élasticité du ressort de freinage (2) est plus élevé qu'un taux de changement d'une force de sollicitation du mécanisme de sollicitation en métal (4) par déplacement unitaire.

6. Dispositif de frein électromagnétique (26) selon la revendication 1, dans lequel le mécanisme de sollicitation en métal (4) est contenu à l'intérieur du corps principal (3).
